# EUROPEAN PATENT SPECIFICATION

(11) **EP 2 907 604 B1**
(45) Date of publication and mention of the grant of the patent: **15.04.2020**
(21) Application number: 13824324.1
(22) Date of filing: 14.10.2013
(51) Int. Cl.: B22F 1/00, B22F 7/00, B22F 3/11, C22C 1/08, B22F 3/22, F16C 32/06, B22F 3/105

(54) **MANUFACTURING PROCESS OF A POROUS COMPONENT AND A POROUS COMPONENT**
VERFAHREN ZUR HERSTELLUNG EINES PORÖSEN BAUTEILS UND PORÖSES BAUTEIL
PROCÉDÉ DE FABRICATION D'UN COMPOSANT POREUX ET COMPOSANT POREUX

(30) Priority: 09.10.2012 BR 102012025883
(43) Date of publication of application: 19.08.2015
(73) Proprietor: Embraco Indústria de Compressores e Soluções em Refrigeração Ltda., 89219-100 Joinville, SC (BR)
(72) Inventor: WITHERS TORRES, Fernando, 89221-040 Joinville -SC (BR); BINDER, Roberto, 89220-730 Joinville- SC (BR); KLEIN, Aloisio Nelmo, 88037-620 Florianópolis - SC (BR); BINDER, Cristiano, Carvoeira - 88040-670 Florianópolis - SC (BR); MULLER SCHROEDER, Renan, 88330-055 - Balneario Camboriu - SC (BR); PAGNAN FURLAN, Kaline, 88036-655 Florianopolis - SC (BR)
(74) Representative: Abel & Imray
(86) International application number: PCT/IB2013/002308
(87) International publication number: WO 2014/057346

(56) References cited:
- WO-A1-2009/029993
- CN-C- 100 419 105
- JP-A- 2009 103 280
- US-A- 4 073 999
- US-A- 5 001 088
- US-B2- 6 901 845

## Description

This invention refers to an enhanced process of powder injection molding MIM in order to obtain a porous component aimed at restricting and controlling the distribution of gas fluid flow in aerostatic bearings of mechanical systems such as hermetic compressors.

### Description of State of the Art

Currently, it is very common to use piston and cylinder sets driven by electric motors for use in gas compressors of cooling equipment, such as residential, commercial and industrial refrigerators, freezers and air-conditioners. One of the technical challenges observed in this type of gas compressor is to ensure that the piston and cylinder have no direct contact. Thus, due to the relative motion between the piston and cylinder, it became necessary to bear the piston by means of a fluid, placed between the moveable surfaces of the piston-cylinder set, avoiding contact among the moveable parts and their premature wearing.

Generally, for aerostatic bearings to work effectively, it is necessary to use a flow restrictor capable of restricting the flow of the compressed fluid originated from a high-pressure region in the compressor, so that the gas pressure in the clearance between the piston and cylinder is lower and appropriate for the specific application. In other words, such restriction aims at allowing for reducing or controlling the pressure in the bearing region through load loss and control of flow of the compressed gas coming from a high pressure region in the compressor, as disclosed by the document. Several embodiments have already been developed so as to allow the implementation of restrictors to afford pressure reduction in the bearing region. For instance, US patent US 6,901,845 describes a restrictor which comprises a porous medium, wherein a porous strip is used together with compression rings. A disadvantage of this type of configuration is the need of dimensional accuracy in the production of the compression rings, which makes the productive process more expensive, since the greater the dimensional accuracy, the higher the cost for manufacturing mechanical components. Another US patent (US 6,293,184) describes restrictors formed by microchannels arranged on the outer wall of the cylinder which, together with a sleeve in which said cylinder is inserted, form isolated and closed channels, originating a plurality of restrictors. Like the case of the patent previously mentioned, a disadvantage of this kind of configuration is the need of accuracy in the production of sleeves, which makes production costs more expensive. Another disadvantage of this technique arises from the fact that this type formed with microchannels is susceptible to clogging by particles or dirtiness observed in compressor; therefore, a filter is needed to ensure that the fluid reaches the restrictors free of any kind of dirtiness, since dirtiness would prevent the equipment from properly working. International patent application WO/2008/055809 describes restrictors which consist of tiny holes arranged on the cylinder wall, produced from the laser application. Again, production of tiny holes requires great accuracy, which may prevent the production of compressors at competitive prices at the market. Additionally, the tiny holes may also get clogged by particles or dirtiness observed in the compressor. Therefore, no one knows yet an efficient and satisfactory solution to offer restriction in the flow of gas used in the bearing between a piston and a cylinder of a gas compressor, with good reliability, performance, applicability and, also, of low cost. Thus, this invention describes a solution to fulfill this gap, technically made possible by the use of refined porous materials to control the fluid flow, which materials can be produced through a processing route adapted from the technique of parts' powder injection molding and sintering.

Technically, in engineering, the expression "porous material" is used when the engineering function of the material is made possible by the presence of pores in its volume, whose volume percent, size, distribution depend on its specific application. When some material has residual pores as a consequence of its production process but the pores are not necessary to meet its engineering function, these pores are considered tolerable, when they do not harm the application, and undesirable, when they negatively affect the material's performance in the intended use or application. As to the type of pores, the materials can be classified into materials with closed pores, which can be used as structural support, or materials with open pores, which can be used mainly where transportation of fluids is necessary; for instance, in flow control, filtration, catalyst supports, thermal insulation and soundproofing, lubricant deposition, among others. The process used to produce the porous materials defines their properties, such as (closed or open) porosity, the volume percent of pores in the volume, the size and shape, uniformity in distribution and interconnectivity of the pores.

Structures with open porosity can be formed by processing routes such as replica, controlled deposition of material (INCOFOAM), by rapid prototyping techniques, powder metallurgy techniques such as sintering of powder mixtures containing a sacrifice phase (space holder) combined with the (metallic or ceramic) matrix powder, which is eliminated during the sintering step, etc. Materials with closed pores can be produced by the combination of a metallic matrix with hollow elements ("syntactic foams"), compacting mixtures of alloy powder with foaming agents, sintering of powder simply poured in recipients, injection of gas directly in cast metal or addition of a pore forming agent in cast metal, etc.

Several alternative processing methods for the production of porous materials have been proposed over the years. However, for the particularly intended application; that is, fluid flow control for aerostatic bearings in hermetic compressors, the porous components must have low cost; therefore, it might be possible to produce them in large series of equivalent parts through a high-productivity process with high automation level and easy control. For this purpose, the powder metallurgy techniques are high potential processing techniques. Due to the high open porosity and high load loss necessary at the same time in the porous component proposed, it is necessary to generate a refined porous structure, leading to the need of using fine powders with narrow grain size distribution to enable a narrow distribution in the size of pores, such as those used in the alternative technique of powder metallurgy, called powder injection molding. This technique, due to the use of very fine powders and narrow size distribution, allows for obtaining a general refined microstructure, including all the micro-structural elements, including the structure of pores when sintering is incomplete; that is, when conducted at sufficiently low temperatures to avoid marked densification through sintering of the green part. Therefore, it is possible to obtain a porous component with a high percent of open pores which are fine (few micrometers), homogenously distributed in the volume of the porous component, allowing for obtaining refined control of flow and load loss through it, with this porous component being a flow restrictor. It is important to highlight that, unlike the application described herein; that is, producing a porous body, the powder injection molding technique is known in the engineering sector as a technique which allows for obtaining high density components (low residual porosity) in view of the high sinterability presented by the very fine powders used (typically powders with an average size about 1 to 40 micrometers, depending on the process of powder production). Typically, powder injection molding, carried out in regular conditions, leads to components with a volume percent lower than 5% of residual closed pores (not communicating with each other). However, as it is shown in this invention, through the use of a duly selected powder raw material and appropriate processing parameters, it is possible to obtain a sintered porous material with porosity and pore size suitable for the production of porous components with the engineering function intended in this invention; that is, use as a porous restrictor which allows for refined control of gas fluid flow for the aerostatic bearing of the cylinder-piston set in hermetic compressors.

Metal Injection Molding (MIM) has become an extremely attractive process because it combines the versatility and productivity of plastic injection molding with the properties inherent to metallic materials. The powder injection molding process (hereinafter referred to as PIM) stands out among the techniques for producing materials from raw material in the form of powder, such as ceramic powders, composites and, more recently, metallic powders. More concretely, one of the advantages of powder injection molding - in light of the techniques traditionally employed, such as matrix uniaxial pressing, extrusion and gluing - is the capacity of producing parts with high geometric capacity in their shape. These parts, when produced by other processes, need many additional operations to obtain such complexity in their shape.

Currently the potential market that absorbs the products manufactured based on this molding process essentially comprises parts that have little mass and dimensions and high densification rate, which need production in large scale. In other words, the main markets served by the materials and parts obtained by the powder injection molding process are the automotive, orthodontic, defense and arms, electro-electronics markets and also the medical industry, mainly.

In terms of process, the PIM is basically divided into metal injection molding (MIM) process and the Ceramic Injection Molding (CIM) technique.

In short, the basic principle of the powder injection molding process lies on two industrially consolidated techniques: polymer injection and conventional powder metallurgy. To summarize, the (ceramic and/or metallic) powders are mixed with an organic system formed by polymers together with other organic substances (for instance, paraffin and polypropylene). Thus, these organic products are used as vehicle to transport a load of metallic, ceramic particles (powders) or a mixture of both, seeking to fill in the cavity of a certain mold which has the shape of the part (component) to be obtained.

Currently, in engineering practice, the material one intends to obtain when the metal injection molding process (MIM) is used is a metallic material of high density (that is, with low content of residual pores), enabling - through reduction of residual porosity due to high sinterability of the fine powder used - significant improvement in the component's mechanical properties such as harness, resistance and ductility, if compared to a sintered material produced by traditional powder metallurgy; that is, through matrix uniaxial pressing of powders with average size of particles 10 times greater (approximately 100 µm).

More concretely, the PIM process currently employed seeks to completely eliminate the pores of the material through the formation of contacts between the powder particles and the increase of these contacts during sintering at high temperatures. On the other hand, the sintering of the components at high temperatures after their injection molding results in intense volume contraction which can lead to dimensional variations and distortions in the final part obtained. In addition to the use of high sinterability powders, to obtain a component with high densification (low percent of residual pores), as a rule, the "green" density of the injected element must be high, that is, the load of solid particles present in the feedstock for injection should be as high as possible. Thus, in powder injection molding, one seeks to minimize the presence of pores in order to reach the quality of a final dense material, with great geometric accuracy, since the applications of the components produced under powder injection molding require these properties. The main current applications are: bone grating, orthodontic brackets, components of surgical tools, firearms, automotive parts, among others.

Unlike what is currently practiced in powder injection molding, the process covered by this invention seeks to employ, in a useful and enhanced fashion, the property of pore formation based on the PIM technique, by offering the advantages thereof, such as reducing as much as possible the losses of raw material, facilitating the accurate control of the chemical composition desired, eliminating machining operations, good superficial finishing; easily automated production process, products obtained with high purity.

US 5001088 A (Haputmann Holger et al), published 19 March 1991, discloses a porous form body produced of sinterable SiC-powder by forming a suitable suspension of said SiC-powder and then treating the suspension to convert it into droplets and the droplets into a granular material in which the granules are substantially larger than the particles of SiC-powder. The granular material is then formed into a green body, e.g. by spraying the granules onto a negative mold of the form body or slip-casting or the like. The green body is then sintered whereby the resulting porosity in the final form body provides the form body with low drag.

### Brief description of the invention

In accordance with an aspect of the invention there is provided a process for manufacturing a porous component as defined in the appended claims.

In accordance with another aspect of the invention there is provided a porous component as defined in the appended claims.

### Brief description of the drawings

This invention will be described next in more details, based on an example of implementation represented in the drawings of the attached figures. Figures show:
Figure 1 - examples of porous components obtained through powder injection molding;
Figure 2 - is a view in perspective of an example porous component; and
Figure 3 - is a view in perspective of a porous component in accordance with an embodiment of this invention.

### Detailed description

In embodiments of the invention the process for manufacturing the porous material used is powder injection molding (PIM), which is a variant technique of powder metallurgy, improved herein to make it possible to obtain a porous structure with the features necessary for the specific desired application; in other words, a porous component for the uniform distribution of gas fluid (flow restrictor) seeking aerostatic bearing.

One of these applications is found in the aerostatic bearing of compressors, whose bearing is achieved through a gas layer capable of keeping a piston's linear movement in balance inside a cylinder. In order to do this, the amount of gas responsible for bearing the piston needs to be constant and, to control the fluid flow, it is necessary to use a porous component 1 with an homogenous porous structure, which not only allows for regulating the flow but also its uniform distribution in the system to be borne. The development of the porous component 1, called porous restrictor, and the pair of particulate materials to be used are also covered by the process of this invention.

The porous components 1 consist of metal for accurate control of the gas flow into an aerostatic bearing, for instance, between the pair piston and cylinder of the compressor. The materials must show good chemical resistance, especially against corrosion, to avoid degradation as a result of corrosion and, consequently, changes in the morphology of the pores, leading to changes in the characteristics of the porous component.

The several materials that can be used include stainless steel.

In order to ensure the maintenance of a porous structure with a high percentage of open pores, embodiments of the invention uses low sintering temperatures, ranging from 850°C and 1200°C, lower than those generally used in the sintering of dense mechanical components (1200 to 1400°C).

For clarification purposes, dense mechanical components are those which, despite having a certain percentage of residual closed pores (less than 5% in volume), do not have open pores and, therefore, cannot be percolated by fluids.

When some control with variable flow over the length of an aerostatic bearing is required, it is possible to manufacture and apply restrictors with different flows, inserted over the length of the bearing, with the possibility of obtaining such variation at the desired flow. These porous elements with different flow characteristics can be obtained by varying the characteristics of the metallic powder used in their production or, by varying the sintering temperature, at which the injected component will be sintered. Please note that it needs to be only slightly different to generate a distinct porosity level on each porous component 1.

In view of this flexibility for designing a porous structure, as required by the aerostatic bearing, the supply of porous elements 1 manufactured by powder injection molding is an economically very attractive technique.

According to the disclosure a process for manufacturing a porous component may comprise the following steps, described in details below:
Step i): homogenization of at least one preparation comprising (a) a first portion of metallic powder and (b) a binder, comprising a mixture of thermoplastic polymers and waxes, up to at least an homogenization point;
Step ii): granulation of the preparation obtained in step i);
Step iii): heating of the granulated preparation obtained in step ii) up to at least a temperature of initial melting of the binder;
Step iv): filling in the cavity of a mold with at least one mixture obtained in step iii);
Step v): compression of at least one mixture obtained in step iii) at a certain speed and pressure in the cavity of a mold until it is completely filled in;
Step vi): removal of waxes from the material obtained in step v), by means of chemical extraction;
Step vii): removal of thermoplastic polymers from the material obtained in step vi), by means of chemical extraction;
Step viii): pre-sintering of the material obtained in step vii), up to at least a temperature which promotes mechanical resistance sufficient to handle the material;
Step ix): controlled sintering of the molded material obtained in step viii) at a temperature that results in a sintered body with expressive volume percent of open pores (ranging from 6% to 50%).

The manufacturing process in this example starts with selecting the composition of the preparation (feedstock), which comprises a first portion of metallic powder and a mixture of thermoplastic polymers and waxes, which work as vehicle to transport the particles in injection.

Preferably, the manufacturing process herein uses metallic powder, such as iron powder, nickel powder, copper powder or stainless steel powder 316L and 17-4 PH.

Please note that, for good results in the metal injection molding process, the selected powder needs to have specific characteristics, such as high particle packing, good injection capability and capacity of helping retain the shape of the component that will be molded. Preferably, but not necessarily, the metallic powder used in this process has narrow grain size distribution, in which practically all particles have similar diameters. This allows the interconnected matrix of open pores in the volume of the porous material obtained by the end of the process to present a very reduced diameter variation as well. In turn, the mixture of thermoplastic polymers and waxes which comprises the preparation and works as binder is responsible for ensuring fluidity to the preparation to be molded and for helping obtain the homogeneity of this first mixture.

The binder used in this type of process is generally comprised by a mixture of polymers with low molecular weight and larger chains. The low molecular weight polymers, such as paraffin, beeswax and carnauba wax, facilitate the outflow of the metallic powder preparation and binder during molding thereof. In turn, larger chain polymers aim at properly supporting the molded material, especially in the initial steps of the process. Examples of these polymers are polypropylene, polystyrene and ethyl vinyl acetate.

Thus, preferably, but not necessarily, the binder used in this process is a mixture of thermoplastic polymers and waxes.

More concretely, the thermoplastic polymers used in the preparation of mixtures of powders with organic binder in this process can afford mechanical resistance to the preparation (feedstock) which will be molded by injection (step v). For this purpose, the thermoplastic polymers of the preparation do not have their structure affected during the first step of removal of waxes (chemical extraction - step vi).

Please note that, preferably, the preparation has a relation of metallic powder and mixture of thermoplastic polymers and waxes at a ratio that ranges from 20% and 80%, preferably from 40% and 60%.

Once the components for the preparation (feedstock) are defined, they follow into step i) of this process, which seeks to homogenize the preparation up to at least an homogenization point. Such homogenization point must achieve a sufficiently homogeneous preparation free of gaps; after all, the homogeneity within the components of the preparation increases the interaction of the metallic powder with the mixture of thermoplastic polymers and waxes.

This first step i) is performed with the use of mixers which enable a high shear rate equally distributed in the entire chamber, such as planetary mixers, of type Z or cam.

The homogeneously mixed preparation obtained in step i) follows into step ii), where granulation (or pelletizing) of this preparation occurs, improving the injector's feeding. This step is carried out by a pelletizer .

Once granulated, the preparation arising from step ii) follows into step iii), where it is heated up to, at least, a temperature of initial melting of the mixture of thermoplastic polymers and waxes. This step occurs to favor the rheological and outflow characteristics of the preparation which will be later inserted into a mold (steps iv and v).

Next, the preparation properly heated up follows into step iv), where a mold cavity is filled in with said heated preparation. Please note that the mold selected for this process must resist higher pressures and longer cooling time in comparison to the molds generally used in polymer injection molding.

The mold cavity of step iv) filled in with the preparation then follows into step v), where at least a mixture obtained in step iii) is compressed at a certain speed and pressure in the cavity of a mold until it is completely filled in.

For this step v), molding is performed with equipment units similar to those used for conventional polymer injection molding, the so-called injectors. In this regard, during molding, the spool compresses the material load so that this material is compacted, filling in the entire mold cavity. By the end of this step v), the preparation is compacted as a porous component 1 which has the shape of the mold wherein it was injected, its form being preserved by the mixture of thermoplastic polymers and waxes.

The following step vi) comprises the removal of waxes from the molded prepared material, obtained in step v), by means of chemical extraction. Chemical extraction is the immersion of the material molded in step v) into some fluid whose goal is to dissolve the waxes of the preparation. By the end of this stage, the molded material (still containing the metallic powder agglutinated by the thermoplastic polymers in its composition) is obtained with an open porosity structure. This final structure helps the next step vii) of thermal extraction. Preferably, but not necessarily, the removal of the organic binder of step vi) occurs in some liquid at a temperature ranging from 20°C to 60°C, for at least 1 hour, and this step can take longer or less time depending on the chosen liquid and temperatures.

Subsequently, the molded material obtained in step vi) follows into step vii), in which, by means of thermal extraction, thermostatic polymers remaining in the material are removed. This procedure consists of heating up the molded material, at suitable conditions, with thermal degradation of thermoplastic polymers. In other words, the molded material is heated up so as to cause an activation which leads to the gradual break of the polymer chain of thermoplastic polymers and enables the formation of initial contacts of sintering, capable of ensuring the preservation of shape of the porous component 1 in replacement of the polymer which is being gradually extracted.

Preferably, but not necessarily, the thermal extraction of thermoplastic polymers occurs by heating up the molded material in a plasma assisted furnace or in a conventional resistive furnace.

By the end of step vii), it is possible to obtain the amount of particles of the metallic powder from the initial preparation, in the geometry of the molded component, which particles are feebly bound by sintering contacts that are still incipient.

This piled metallic powder obtained in step vii) then follows into step viii), which consists of pre-sintering the material obtained in step vii). In essence, this step promotes the beginning of the process for removing the empty spaces contained amidst the many particles of metallic powder.

Preferably, step viii) is performed by heating up the molded material obtained in step vii) up to at least a temperature that promotes mechanical resistance sufficient to handle the material.

Thus, step viii) is performed, for instance, in a plasma assisted furnace or in a conventional resistive furnace, at a temperature ranging from 400°C to 1200°C, for at least a time interval sufficient to enable mechanical resistance for handling or which supplies the porous microstructure desired for the engineering application proposed; that is, flow restrictor. The time necessary to obtain the final desired properties may range from few minutes to several hours, depending, for instance, on whether pre-sintering occurred or not, or even on the combination of steps viii and ix.

Finally, by the end of step viii) the molded material follows into step ix), which comprises the controlled sintering of the molded material obtained in step viii), so as to supply a controlled and homogenous porosity material, which is the subject matter obtained by the process covered by this example.

Typically, the final porosity of the components obtained through powder injection molding results from this last step ix) of sintering in view of the thermally activated mass transportation, resulting in the reduction of the free specific surface due to the increase of contacts amidst the particles, their coalescence, volume reduction and change in the geometry of the pores, up to complete densification thereof.

In this process, step ix) can be divided into 3 stages:
- Stage 1: Formation of sintering contacts. Contacts amidst particles form "bridges;" that is, the matter becomes continuous in the region of the contacts. At this stage, there is no huge motion (or contraction) of particles;
- Stage 2: with the growth of ratio 'neck radius/particle radius', particles gradually lose their intensity. At this stage, the sintered material has two "continuous" phases: that of the material (solid phase) and the "empty" phase (interconnected matrix of open pores). Grain size increases, resulting in a new microstructure. Most part of retraction happens in this stage.
- Stage 3: Isolation, rounding and coalescence of pores occur (theoretical density higher than 90%). If the pores contain insoluble gases in the base metal, complete densification will not be possible. If pores are empty or contain gases soluble in the matrix, complete densification may occur.

In this process, the molded material arising from step viii) is subject to a sufficiently low sintering temperature so that sintering does not progress much in stage 2 and does not arrive at stage 3, keeping interconnected matrix of open pores in the final material, that is, unlike the sintering processes of the state of the art on powder molding, in which the sintering in the process of this example is not taken to the traditional third stage, in which stage reduction, coalescence and loss of interconnectivity of the pores would occur.

In a preferred example, the end of the process refers to the sintering process carried out in a conventional furnace, in a vacuum furnace or in a plasma assisted vacuum furnace, for instance, where the porous structure and the desired properties for the component are obtained.

As an example, in the state of the art, the step of sintering of stainless steel powder 316L or 17-4 PH is regularly carried out at temperatures ranging from 1250°C to 1380°C and from 1200°C to 1300°C for iron powder and nickel powder, seeking complete removal of the interstices amidst particles; that is, practically null interstitial porosity, a feature inherent to the final material after going through the traditional sintering process.

For the process for manufacturing the porous component 1 in this example, when stainless steel powder is used, sintering is performed at lower temperatures, ranging from 900°C a 1200°C. For iron or nickel powders, in turn, the implementation of the sintering process occurs at temperatures ranging from 700°C to 1100°C. Therefore, the elimination of interstices is minimized, leaving a controlled interstitial porosity (6% to 50% of gaps uniformly distributed).

Please also note that the greater the amount of binding phase, the greater the volume contraction. Thus, the largest dimensional variations for the process are statistically located in the injection step (step iv). If the injection step (step iv) contains green density gradient in the injected element, then, during sintering, deformations will occur which can be intentional or not, in view of the porosity intended.

In a preferred example, step ix) is carried out in a furnace at a temperature ranging from 700°C to 1200°C depending on the material chosen for the production of the porous component.

For such reasons, the process of this example allows for obtaining different results from those of the sintering process known in the state of the art , adding, to the obtained component, not only the previously expected advantages - such as the geometric complexity achieved and full use of the injected material - but also a process for producing a material with homogeneous and controlled porosity, energy efficient, easy to be implemented in industries of the field and to be broadly used at the market.

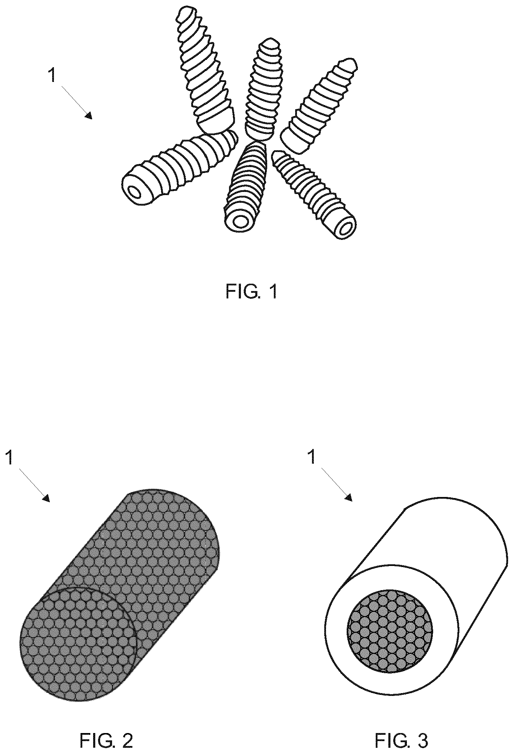

Furthermore, as it can be seen from figure 2 on, this process for manufacturing a porous component 1 becomes versatile on obtaining complex geometric forms already finished due to its rheological characteristic. Therefore, it is possible to obtain distinguished geometries, such as threads in some specific portion of the final porous component 1. Some projected protuberance can also be obtained.

As an extremely significant advantage of this process, geometric variations are achieved without the need of additional machining steps as exemplified by figure 2.

The process for manufacturing porous components 1 according to the invention comprises a component having regions or layers with very different porosity; that is, the porous component is configured to have more porosity in the inner region and lesser porosity, or even almost null porosity, in the outer region (please check figure 3).

Such configuration is achieved as follows: Step i) comprise the independent homogenization of two or more preparations which, after being separately granulated (step ii), will be used to fill in the cavity of a mold (step iii) according to the final material expected. Thus, according to the selected component, it is possible to inject, for instance, two prepared materials: on the outer side of the mold, a preparation which is dense at sintering temperature; and another one on the inner side of the mold which remains porous at such sintering temperature. According to this process, by the end of step ix), it is possible to obtain a final material free of pores on the edge and which is porous in the core.

Alternatively, it is also possible to use the same material in powder for the preparation, with different grain sizes. Therefore, for instance, some finer grain size powder with greater sinterability is used on the outer side of the mold, and some thicker grain size powder is used on the inner side of the mold. Finer powders, or with lesser grain size, achieve higher densities at the same sintering temperature, whereas thicker grain size powder has lower densification and, consequently, higher porosity.

The production of these components with different porosity on the superficial layer is also possible through powder injection molding, particularly in the type called powder injection molding of multi-material parts, or also called powder injection molding of two components or, finally, merely known as coinjection. In this process, one injects the first material which will comprise the most porous inner side and, subsequently, the second material which will comprise the dense outer coverage.

The multi-material component is then sintered at the temperature expected for the sintering of the core material which must remain porous so that it can have the specific properties previously described and necessary for the porous component 1. At this temperature, due to the greater sinterability of the material or powder of the outer cover, such cover tends to become denser - without open pores; that is, with content of pores substantially lower than 10%.

To have the porosity level different in the two regions mentioned, it is necessary to use different materials and/or powders in each region of the porous component 1, (please check figure 3). Therefore, a requirement for this is that the pair of selected materials have sintering compatibility, so as to avoid flaws on the junction interface. It should also be assumed that, for the same sintering temperature, the material - internally placed in the porous component of figure 3 - sinters less than the material placed on the outer cover; in other words, that the inner material's porosity ranges from 6% to 50% whereas the outer material shall have no more open pores (lower than 6%).

Therefore, it is possible to apply any powder and/or material which has, after the sintering process, the characteristics necessary for the optimal functioning of the porous component 1.

The multiple possibilities include to combine the same material, for instance, stainless steel, as long as the powders used have quite different average particle size. The thicker powder, placed inside the porous component 1, has lesser sinterability than the fine powder used to inject the outer cover of the porous component 1, due to the lower amount of metallic contacts existing amidst the particles per unit of volume, therefore resulting in a higher level of porosity - as mentioned, preferably between 6% and 50%.

Another solution for the selection of materials of the porous component 1, represented by figure 3, is achieved by the use of any material that enables the desired level of porosity on the inner side of the component and another material which, at the ideal sintering temperature selected, forms a liquid phase and promotes sintering through liquid phase, generating a high level of densification on the outer side.

An example among the many available would be the use of stainless steel inside the porous component 1, representing the functional portion of the set, and another steel with a liquid-phase forming element, for instance, Boron, Phosphorous or Copper. As this outer portion will have more density and smaller pores, these have more capillary force, thus retaining the liquid and preventing it from migrating to the inner side of higher porosity and size of pores which consequently have lesser capillary force. Thus, it is possible to preserve the characteristics of microstructures and accurate flow control.

Additionally, the use of an element which forms a liquid phase during sintering and after the solidification of a soft material (which deforms plastically), such as copper, for instance, facilitates the solution of fixation by interference, because the soft material will easily deform and seal the porous restrictor, avoiding leakage and loss of efficiency, without changing the porous structure of the inner part of the porous component 1, which is responsible for controlling the flow of gas.

Please note that, if there are escape routes on the interface of the porous restrictor with an aerostatic bearing where this is fixed, leakage may occur and flow control may become difficult, hindering the proper functioning of the aerostatic bearing.

Another way to associate the porous component 1 with the aerostatic bearing could be gluing; however, the use of glues (liquid adhesives), is not adequate in the presence of open pores, since they will penetrate in the interconnected matrix of open pores via capillary force, partially clogging the pores. This change in the porous structure of the porous component 1 may hinder its performance in the intended application. The solution proposed and developed in this invention consists of obtaining a dense layer on the lateral surface of the porous component 1 through coinjection or over-injection/encapsulation of a layer using injection feedstock comprised by particulate material different from the porous core; that is, particulate material which has typically lower sintering temperature and which has greater sinterability than the particulate material that constitutes the porous core of the injected component. Thus, during sintering, greater densification occurs on the lateral surface of the porous component. The porous component 1 may then be efficiently fixed by several fixing processes (interference, gluing, tapping, etc.), since the dense part is not participating in flow control and plays the exclusive role of ensuring fixation of the restrictor on the mechanical system without interfering with its porous structure.

Finally, another solution for selecting materials of the porous component of figure 3 would be the mere combination of materials with different sinterability, for instance, a stainless steel powder in the inner region and nickel powder in the outer region.

The process for producing porous material described above may be used in the production of several types of porous components 1 for use in different applications. Within this context, preferably, this invention is used in the production of porous flow restrictors for aerostatic bearing.

Usually, for an aerostatic bearing to function effectively, it is necessary to use a flow restrictor capable of limiting the flow of the compressed gas originated from a high pressure region in the compressor, so that the gas pressure present in the gap between the piston and cylinder is lower and appropriate for the application. In other words, such restriction seeks to allow the reduction or control of pressure on the bearing region by restricting the flow of compressed gas coming from a high pressure region of the compressor.

The flow restrictor is comprised by a porous component 1, linked to a housing in the bearing, having at least a restrictor portion with some porosity dimensioned to restrict the flow of gas which flows from the inner cavity to the bearing clearance in a compressor. Therefore, the gas goes through the porous component 1 towards the bearing clearance, forming a gas mattress.

The major advantage of producing a porous flow restrictor for aerostatic bearing through the process herein is to obtain a flow restrictor with controlled porosity which is homogeneously distributed on the volume of the material.

After describing examples of preferred embodiments, it shall be understood that the scope of the present invention encompasses other possible variations and applications, being limited only by the contents of the attached claims.

## Claims

1. Process for manufacturing a porous component (1) to be used as a flow restrictor in aerostatic bearing applied to hermetic compressors, **characterized in that** a dual-porosity porous component (1) is obtained through powder injection molding of multi-material parts comprising the following steps: step i): homogenization of two different preparations comprising (a) first portion of metallic powder and (b) an organic binder, comprising a mixture of thermoplastic polymers and waxes; step ii): granulation, in separate stages, of at least two different preparations obtained in step i); step iii): heating of the granulated preparations obtained in step ii) up to the temperature of initial melting of the binder; step iv) injection molding the first preparation to form an inner portion of the component, step v) injection molding the second preparation to form an outer portion of the component covering the inner portion of the component step vi) removal of the organic binder in at least one step by using at least one of the thermal and chemical processes; step vii): pre-sintering of the material obtained in step vi), at a temperature that promotes mechanical resistance sufficient to handle the material for the subsequent steps; and step viii): controlled sintering of the molded material obtained in step vii) at a temperature that promotes densification through sintering up to a residual porosity lower than 5% on the outer portion of the porous component (1) forming an outer portion that do not have open pore and, at the same time, that keeps a volume percent of open pores substantially higher than 5% on the inner portion of the porous component (1), wherein step viii) may occur simultaneously with the earlier step.

2. Process for manufacturing a porous component (1) according to claim 1, **characterized in that** powders with different grain sizes are used, wherein finer powders are used in an outer denser portion of the porous component (1) and those powders with thicker grain size are used in the core of the porous component (1).

3. Process for manufacturing a porous component (1) according to claim 1, **characterized in that** powders of similar grain sizes are used, wherein on the outer portion of the porous component (1), a liquid-phase forming element is also used during the sintering step.

4. Process for manufacturing a porous component (1) according to claim 1, **characterized in that** the liquid-phase forming element is comprised by at least one of the following materials: boron, phosphorous and copper.

5. Process for manufacturing a porous component (1) according to claims 1 to 4, **characterized in that** on the more dense portion of the porous component (1) a material is used capable of achieving high densification during step ix) and, on the inner portion of the porous component (1), a material is used capable of achieving low densification during step vii).

6. Porous component obtained by the process defined by claims 1 to 5 to be used as a flow restrictor in aerostatic bearing applied to hermetic compressors.

## Patentansprüche

1. Prozess zur Herstellung eines porösen Bauteils (1), das als Strömungsbegrenzer in einem aerostatischen Lager verwendet werden soll, das auf hermetische Verdichter angewendet wird, **dadurch gekennzeichnet, dass** ein poröses Bauteil (1) mit doppelter Porosität durch Pulverspritzgießen von Multi-Materialteilen erhalten wird, die folgenden Schritte umfassend: Schritt i): Homogenisierung von zwei verschiedenen Präparaten, umfassend (a) einen ersten Anteil eines Metallpulvers und (b) ein organisches Bindemittel, das eine Mischung aus thermoplastischen Polymeren und Wachsen umfasst; Schritt ii): Granulierung, in separaten Stufen, von mindestens zwei verschiedenen, in Schritt i) erhaltenen Präparaten; Schritt iii): Erwärmen der in Schritt ii) erhaltenen granulierten Präparate bis zur Temperatur des anfänglichen Schmelzens des Bindemittels; Schritt iv) Spritzgießen des ersten Präparats, um einen inneren Abschnitt des Bauteils zu bilden, Schritt v) Spritzgießen des zweiten Präparats, um einen äußeren Abschnitt des Bauteils zu bilden, der den inneren Abschnitt des Bauteils bedeckt, Schritt vi) Entfernen des organischen Bindemittels in mindestens einem Schritt durch Verwendung mindestens eines der thermischen und chemischen Verfahren; Schritt vii): Vorsintern des in Schritt vi) erhaltenen Materials bei einer Temperatur, die mechanische Festigkeit fördert, die ausreicht, um das Material für die nachfolgenden Schritte zu handhaben; und Schritt viii): gesteuertes Sintern des in Schritt vii) erhaltenen Formmaterials bei einer Temperatur, die die Verdichtung durch Sintern bis zu einer Restporosität von weniger als 5 % am äußeren Abschnitt des porösen Bauteils (1) fördert, wodurch ein äußerer Abschnitt gebildet wird, der keine offenen Poren aufweist, und der gleichzeitig einen Volumenprozentanteil offener Poren von wesentlich mehr als 5 % am inneren Abschnitt des porösen Bauteils (1) beibehält, wobei Schritt viii) gleichzeitig mit dem früheren Schritt erfolgen kann.

2. Prozess zur Herstellung eines porösen Bauteils (1) nach Anspruch 1, **dadurch gekennzeichnet, dass** Pulver mit unterschiedlichen Korngrößen verwendet werden, wobei feinere Pulver in einem äußeren, dichteren Abschnitt des porösen Bauteils (1) und jene Pulver mit dickerer Korngröße im Kern des porösen Bauteils (1) verwendet werden.

3. Prozess zur Herstellung eines porösen Bauteils (1) nach Anspruch 1, **dadurch gekennzeichnet, dass** Pulver mit ähnlichen Korngrößen verwendet werden, wobei am äußeren Abschnitt des porösen Bauteils (1) während des Sinterschritts auch ein flüssigkeitsphasenbildendes Element verwendet wird.

4. Prozess zur Herstellung eines porösen Bauteils (1) nach Anspruch 1, **dadurch gekennzeichnet, dass** das flüssigkeitsphasenbildende Element zumindest eines der folgenden Materialien umfasst: Bor, Phosphor und Kupfer.

5. Prozess zur Herstellung eines porösen Bauteils (1) nach den Ansprüchen 1 bis 4, **dadurch gekennzeichnet, dass** auf dem dichteren Abschnitt des porösen Bauteils (1) ein Material verwendet wird, das in der Lage ist, während Schritt ix) eine hohe Verdichtung zu erreichen, und dass auf dem inneren Abschnitt des porösen Bauteils (1) ein Material verwendet wird, das in der Lage ist, während Schritt vii) eine geringe Verdichtung zu erreichen.

6. Poröses Bauteil, erhalten durch den durch die Ansprüche 1 bis 5 definierten Prozess, das als ein Strömungsbegrenzer in einem aerostatischen Lager verwendet werden soll, das auf hermetische Verdichter angewendet wird.

## Revendications

1. Procédé pour fabriquer un composant poreux (1) destiné à être utilisé comme limiteur de flux dans un palier aérostatique appliqué à des compresseurs hermétiques, **caractérisé en ce qu'**un composant poreux à double porosité (1) est obtenu par moulage par injection de poudres de plusieurs matériaux comprenant les étapes suivantes : étape i) : homogénéisation de deux préparations différentes comprenant (a) une première partie de poudre métallique et (b) un liant organique, comprenant un mélange de polymères thermoplastiques et de cires ; étape ii) : granulation, dans des phases séparées, d'au moins deux préparations différentes obtenues à l'étape i) ; étape iii) : chauffage des préparations granulées obtenues à l'étape ii) jusqu'à la température de fusion initiale du liant ; étape iv) : moulage par injection de la première préparation pour former une partie interne du composant ; étape v) : moulage par injection de la seconde préparation pour former une partie externe du composant recouvrant la partie interne du composant ; étape vi) : retrait du liant organique en au moins une étape en utilisant au moins un parmi les procédés thermique et chimique ; étape vii) : pré-frittage du matériau obtenu à l'étape vi), à une température qui favorise une résistance mécanique suffisante pour manipuler le matériau pendant les étapes suivantes ; et étape viii) : frittage contrôlé du matériau moulé obtenu à l'étape vii) à une température qui favorise la densification par frittage jusqu'à une porosité résiduelle inférieure à 5 % sur la partie externe du composant poreux (1) formant une partie externe qui n'a pas de pore ouvert et, en même temps, qui conserve un pourcentage en volume de pores ouverts sensiblement supérieur à 5 % sur la partie interne du composant poreux (1), dans lequel l'étape viii) peut se dérouler simultanément à l'étape précédente.

2. Procédé pour fabriquer un composant poreux (1) selon la revendication 1, **caractérisé en ce que** des poudres ayant des tailles de grainsdifférentes sont utilisées, dans lequel des poudres plus fines sont utilisées dans une partie externe plus dense du composant poreux (1) et les poudres ayant une taille de grains plus épaisse sont utilisées dans la partie centrale du composant poreux (1).

3. Procédé pour fabriquer un composant poreux (1) selon la revendication 1, **caractérisé en ce que** des poudres ayant des tailles de grains similaires sont utilisées, dans lequel sur la partie externe du composant poreux (1), un élément formant une phase liquide est également utilisé pendant l'étape d'agglomération.

4. Procédé pour fabriquer un composant poreux (1) selon la revendication 1, **caractérisé en ce que** l'élément formant une phase liquide est constitué d'au moins un des matériaux suivants : bore, phosphore et cuivre.

5. Procédé pour fabriquer un composant poreux (1) selon les revendications 1 à 4, **caractérisé en ce que** sur la partie plus dense du composant poreux (1), un matériau est utilisé permettant d'obtenir une densification élevée à l'étape ix) et, sur la partie interne du composant poreux (1), un matériau est utilisé permettant d'obtenir une densification faible à l'étape vii).

6. Composant poreux obtenue par le procédé selon les revendications 1 à 5 destiné à être utilisé comme limiteur de flux dans un palier aérostatique appliqué à des compresseurs hermétiques.
